## Europäisches Patentamt
## European Patent Office
## Office européen des brevets

(19)

(11) Veröffentlichungsnummer: **0 343 614 B1**

(12)

# EUROPÄISCHE PATENTSCHRIFT

(45) Veröffentlichungstag der Patentschrift:
08.01.92 Patentblatt 92/02

(51) Int. Cl.⁵: **F16K 31/72, A62C 37/36**

(21) Anmeldenummer: **89109298.3**

(22) Anmeldetag: **23.05.89**

(54) Gasanschlussarmatur.

(30) Priorität: **27.05.88 DE 3817970**

(43) Veröffentlichungstag der Anmeldung:
**29.11.89 Patentblatt 89/48**

(45) Bekanntmachung des Hinweises auf die
Patenterteilung:
**08.01.92 Patentblatt 92/02**

(84) Benannte Vertragsstaaten:
**AT BE CH DE FR GB IT LI NL**

(56) Entgegenhaltungen:
**DE-A- 3 344 704**
**DE-U- 8 622 308**
**SOVIET INVENTIONS ILLUSTRATED, Sektionen P,Q, Woche 8750, 3. Februar 1988 DERWENT PUBLICATIONS LTD., London P35**

(73) Patentinhaber: **Streif, Hans**
**Via Pastura Castelletto del Lago**
**CH-6983 Magliaso/Lugano (CH)**

(72) Erfinder: **Müllers, Josef**
**Im Sandfeld 2**
**W-4054 Nettetal 2 (DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**W-4000 Düsseldorf 11 (DE)**

**Beschreibung**

Gegenstand der Erfindung ist eine Gasanschlußarmatur für Gasschläuche mit einem Stecker zur Sicherung einer Gasleitung im Brandfall mit einem Gehäuse, in dem ein gegen eine Feder vorgespannter Ventilkörper angeordnet ist. Gasanschlußarmaturen für Gasschläuche sind in der DIN 3383 genormt. Die Gasanschlußarmatur ist zwar mit einem Ventilmechanismus versehen, der beim Abziehen des am Gasschlauch befestigten Steckers schließt, denn aber im Brandfall der Gasschlauch beschädigt wird, kann das Gas frei ausströmen.

Aus dem DE-GM 8622308 ist eine Gasanschlußarmatur mit einem temperaturabhängigen Betätigungsmechanismus bekannt, der mittels einer Haltevorrichtung in Offenstellung und mittels eines auf hohen Temperaturanstieg ansprechenden Bimetalls mit einem davon beaufschlagten Bolzen in Schließstellung überführbar ist.

Aus der DE-PS 3344704 ist eine Gasanschlußarmatur für Gasleitungen bekannt, deren Ventilkörper mittels einer manuellen Betätigungsvorrichtung in Schließstellung überführbar sowie unabhängig davon mittels einer auf Temperaturerhöhung ansprechenden Vorrichtung in Schließstellung beweglich ist, wobei diese Vorrichtung aus einer dem Ventilkörper zugeordneten Dehnstoffpatrone mit einem axial beweglichen, koaxial auf den Ventilkörper arbeitenden Bolzen versehen ist.

Schließlich ist aus dem DE-GM 8709338 eine Sicherheitsabsperrarmatur für eine Gasleitung bekannt, bei der ein Ventilkörper mit einer Feder gegen Metallhülsen vorgespannt ist, die unter einem annähernd halben rechten Winkel am Mantel des Ventilkörpers anliegen. Die Metallhülsen sind an Schmelzkörpern abgestützt, die im Brandfall schmelzen, so daß die Metallhülsen ausweichen können und den Ventilkörper in Schließrichtung freigeben.

Eine Verwendung dieser bekannten Konstruktionen in genormten Gasanschlußarmaturen (Steckdosen) ist ohne tiefgreifende, konstruktive Veränderungen nicht möglich.

Davon ausgehend liegt der Erfindung die **Aufgabe** zugrunde, eine einfach konstruierte Gasanschlußarmatur mit thermischer Auslösung eines Ventilkörpers zu schaffen, die auch für nach DIN 3383 genormte Steckdosen verwendbar ist und deren Auslösezeit sehr kurz ist.

Ausgehend von den bekannten Gasanschlußarmaturen wird als technische **Lösung** folgende Merkmalskombination vorgeschlagen :

a) Der Ventilkörper ist mit einer in seinen Mantel eingelassenen Nut versehen ;

b) in die Nut greift eine unter Wärmeeinwirkung aufweitbare, U-förmig gebogene Spreizfeder mit ihren Schenkeln tangential ein und

c) die Spreizfeder ist mit ihrem Steg und den Enden ihrer Schenkel auf einem Absatz im Gehäuse abgestützt.

Eine nach dieser technischen Lehre ausgebildete Gasanschlußarmatur hat den **Vorteil** einer sehr einfachen, kompakten und äußerst wirksamen Konstruktion. Der Ventilkörper wird unter Einwirkung der Feder direkt in seine Schließstellung bewegt, sobald die Schenkel der Spreizfeder unter Wärmeeinwirkung aufgeweitet werden und aus der Nut herausrutschen. Die Auslösezeit ist sehr kurz. Aufgrund ihrer kompakten Bauweise kann eine erfindungsgemäß ausgebildete Gasanschlußarmatur problemlos in einer nach DIN 3383 genormten Steckdose verwendet werden.

Für die Aufweitung der Spreizfeder im Brandfall zwecks Freigabe des Ventilkörpers in Schließrichtung werden die nachfolgenden Ausführungsformen vorgeschlagen :

In einer ersten Ausführungsform kann die Spreizfeder aus einem bei Temperaturanstieg ansprechenden Bimetall bestehen. Die Bimetallkonstruktion ist dabei so zu wählen, daß die Schenkel der Spreizfeder sich bei Erwärmung öffnen und aus der Nut im Ventilkörper austreten.

In einer zweiten Ausführungsform können die Schenkel der Spreizfeder mit einem axial beweglichen Bolzen einer auf einen Temperaturanstieg ansprechenden Dehnstoffpatrone aufgeweitet werden. Die Dehnstoffpatrone wird zu diesem Zweck unter Zwischenlage von Dichtungen mit einer Klemmschraube am Gehäuse befestigt. Die Ansprechtemperatur und Ansprechzeit kann mit auf dem Mantel der Dehnstoffpatrone angeordneten Wärmeleitsternen herabgesetzt werden. Als Dehnstoffe kommen z.B. Wachs, Paraffin, oder dgl. Werkstoffe in Frage, die ein extremes Ausdehnungsvermögen bei einem Temperaturanstieg zeigen.

In einer dritten Ausführungsform kann die Spreizfeder auch mit einem axial beweglichen Bolzen aufgeweitet werden, der mit einer Feder gegen einen bei Temperaturanstieg erweichenden Schmelzkörper vorgespannt ist. Dabei kann die Feder einerseits am Bolzen und andererseits unter dem Schmelzkörper abgestützt sein. Der Bolzen übergreift den Schmelzkörper zweckmäßig mit einem Schraubkopf, der mit der Feder durch den erweichenden Schmelzkörper hindurchgezogen wird. Dabei kann der Schmelzkörper aus Weichlot oder Blei

2

bestehen.

Weitere Einzelheiten und Vorteile ergeben sich aus der nachfolgenden Beschreibung der zugehörigen Zeichnungen, in denen die drei Ausführungsformen einer erfindungsgemäß ausgebildeten Gasanschlußarmatur schematisch dargestellt worden sind. In den Zeichnungen zeigen :

Fig. 1 eine Gasanschlußarmatur mit einer aus Bimetall bestehenden Spreizfeder entlang der Linie I-I in Fig. 2 geschnitten in Seitenansicht ;

Fig. 2 dieselbe Gasanschlußarmatur entlang der Linie II-II in Fig. 1 geschnitten in Draufsicht ;

Fig. 3 dieselbe Gasanschlußarmatur entlang der Linie III-III in Fig. 1 geschnitten ;

Fig. 4 eine Gasanschlußarmatur mit einer Dehnstoffpatrone entlang der Linie IV-IV in Fig. 5 geschnitten in Seitenansicht ;

Fig. 5 dieselbe Gasanschlußarmatur entlang der Linie V-V in Fig. 4 geschnitten in Draufsicht ;

Fig. 6 dieselbe Gasanschlußarmatur entlang der Linie VI-VI in Fig. 4 geschnitten ;

Fig. 7 eine Auslösevorrichtung mit Schmelzkörper im Längsschnitt.

In einem Gehäuse 1 mit einem Anschlußstutzen 2 für einen Gaseintritt 3 ist auf einer Seite ein als Steckdose ausgebildetes Anschlußstück 4 für die Verbindung mit einem Stecker 5 am Ende eines Gasschlauches 6 vorgesehen, der zu einem Verbraucher, beispielsweise einem Gasherd führt. In dem Anschlußstück 4 ist eine — nicht dargestellte und auch nicht beschriebene — Ventileinrichtung angeordnet, die mit dem Einführen des Steckers 5 geöffnet und mit dem Abziehen des Steckers 5 wieder geschlossen wird.

Auf der dem Anschlußstück 4 gegenüberliegenden Seite ist am bzw. im Gehäuse 1 ein zusätzliches Brandschutzventil 7 angeordnet, welches im wesentlichen aus einem Ventilkörper 8, einem Deckel 9, einer Feder 10 und einer Spreizfeder 11 besteht. Die Spreizfeder 11 ist U-förmig gebogen und greift mit ihren beiden Schenkeln 11a tangential in eine umlaufende Nut 12 am Ventilkorper 8 ein. Mit ihrem Steg 11b und den freien Enden der beiden Schenkel 11a stützt sich die Spreizfeder 11 auf einem Absatz 13 im Gehäuse 1 ab. Auf diese Weise ist der Ventilkörper 8 mit der Feder 10 gegen die Spreizfeder 11 vorgespannt. Sobald die Schenkel 11a der Spreizfeder 11 aus der Nut 12 im Ventilkörper 8 herausgenommen werden, bewegt sich der Ventilkörper 8 schlagartig in seine Schließstellung und kommt dabei an einem Innenkonus 14 im Gehäuse 1 zur Anlage.

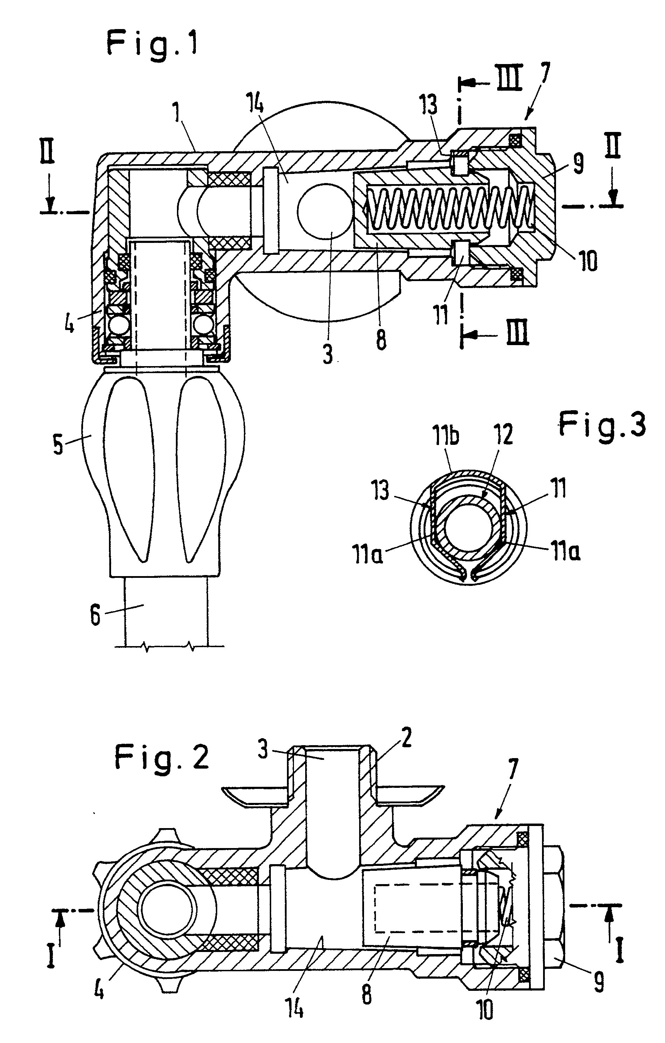

Bei der in den Fig. 1 bis 3 dargestellten Ausführungsform besteht die Spreizfeder 11 aus einem Bimetall, wobei die Metallpaarung so gewählt ist, daß sich die beiden Schenkel 11a bei einem Temperaturanstieg öffnen und aus der Nut 12 herausbewegen. Das Brandschutzventil 7 wird dann schlagartig geschlossen.

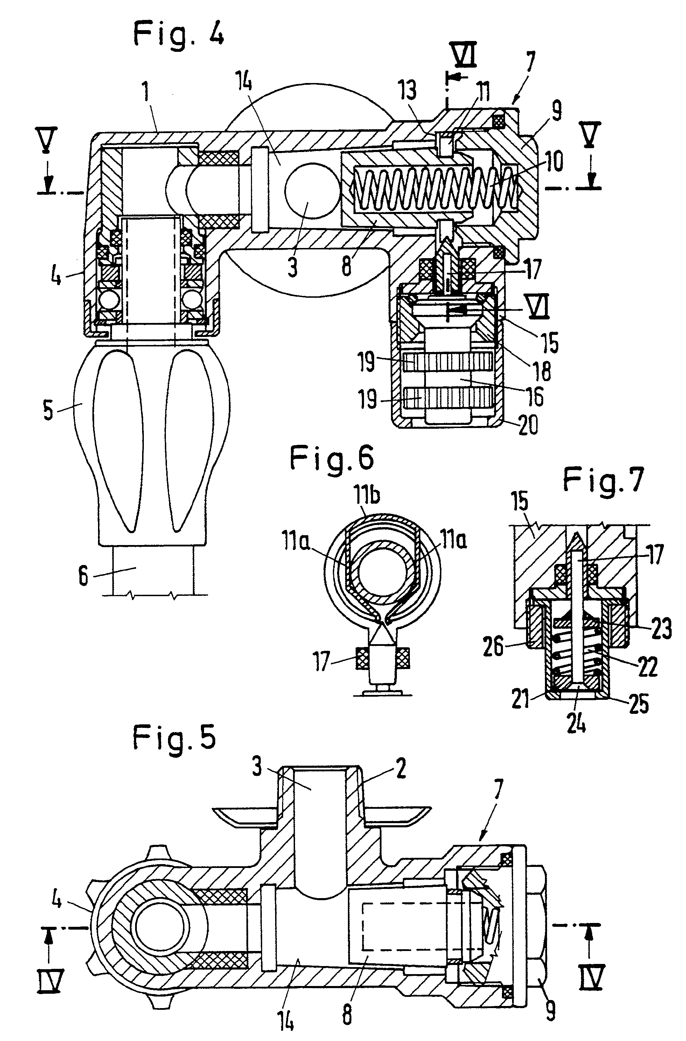

Bei der in den Fig. 4 bis 6 dargestellten Ausführungsform besteht die Spreizfeder 11 aus einem normalen Stahlband und muß deshalb bei einem Temperaturanstieg mit einer besonderen Vorrichtung geöffnet werden. Zu diesem Zweck ist am Gehäuse 1 ein Anschlußstutzen 15 für eine Dehnstoffpatrone 16 mit einem axial beweglichen Bolzen 17 vorgesehen, der bei einem Temperaturanstieg zwischen die freien Enden der Spreizfeder 11 geschoben wird. Die Dehnstoffpatrone 16 ist mit einer Klemmschraube 18 in dem Anschlußstutzen 15 befestigt. Auf der Dehnstoffpatrone 16 sind Wärmeleitsterne 19 zur besseren Wärmeübertragung befestigt. Abgedeckt ist die Betätigungsvorrichtung mit einer Schutzkappe 20.

Anstelle der Betätigungsvorrichtung mit der Dehnstoffpatrone 16 kann nach der in Fig. 7 dargestellten Ausführungsform auch eine Betätigungsvorrichtung mit einem Schmelzkörper 21 verwendet werden. Dazu ist auf dem Bolzen 17 eine Feder 22 angeordnet, die sich einerseits auf einer am Bolzen 17 befestigten Scheibe 23 und andererseits unter dem Schmelzkörper 21 abstützt. Der Bolzen 17 übergreift den Schmelzkörper 21 mit einem Schraubkopf 24. Abgedeckt ist die Betätigungsvorrichtung mit einer Schutzkappe 25, die mit einer Klemmschraube 26 im Anschlußstutzen 15 befestigt ist.

Im Falle eines starken Temperaturanstieges wird der Schraubkopf 24 des Bolzens 17 mit der Feder 22 durch den Schmelzkörper 21 hindurchgezogen, so daß die Enden der Spreizfeder 11 mit dem Bolzen 17 geöffnet werden können.

In allen drei Ausführungsformen wird der Gaseintritt 3 bei einem plötzlichen Temperaturanstieg automatisch geschlossen und kann auch nicht mehr zufällig geöffnet werden. Zum Öffnen ist es erforderlich, den Deckel 9 zu öffnen und den Ventilkörper 8 wieder in seiner Ausgangslage mit der Spreizfeder 11 zu befestigen.

## Patentansprüche

1. Gasanschlußarmatur für Gasschläuche (6) mit einem Stecker (5) zur Sicherung einer Gasleitung im Brandfall mit einem Gehäuse (1), in dem ein gegen eine Feder (10) vorgespannter Ventilkörper (8) angeordnet ist, **dadurch gekennzeichnet,** daß der Ventilkörper (8) mit einer in seinem Mantel eingelassenen Nut (12) versehen ist,

daß in die Nut (12) eine unter Wärmeeinwirkung aufweitbare, U-förmig gebogene Spreizfeder (11) mit ihren Schenkeln (11a) tangential eingreift und
daß die Spreizfeder (11) mit ihrem Steg (11b) und den Enden ihrer Schenkel (11a) auf einem Absatz (13) im Gehäuse (1) abgestützt ist.

2. Gasanschlußarmatur nach Anspruch 1, dadurch gekennzeichnet, daß die Spreizfeder (11) aus einem auf einen Temperaturanstieg ansprechenden Bimetall besteht.

3. Gasanschlußarmatur nach Anspruch 1, dadurch gekennzeichnet, daß die Schenkel (11a) der Spreizfeder (11) mit einem axial beweglichen Bolzen (17) einer auf einen Temperaturanstieg ansprechenden Dehnstoffpatrone (16) aufweitbar sind.

4. Gasanschlußarmatur nach den Ansprüchen 1 und 3, dadurch gekennzeichnet, daß die Dehnstoffpatrone (16) unter Zwischenlage von Dichtungen mit einer Klemmschraube (18) am Gehäuse (1) befestigt ist.

5. Gasanschlußarmatur nach den Ansprüchen 1, 3 und 4, dadurch gekennzeichnet, daß auf dem Mantel der Dehnstoffpatrone (16) Wärmeleitsterne (19) angeordnet sind.

6. Gasanschlußarmatur nach den Ansprüchen 1 und 3 bis 5, dadurch gekennzeichnet, daß die Dehnstoffpatrone (16) mit einer am Gehäuse (1) befestigten Schutzkappe (20) umgeben ist.

7. Gasanschlußarmatur nach Anspruch 1, dadurch gekennzeichnet, daß die Schenkel (11a) der Spreizfeder (11) mit einem axial beweglichen Bolzen (17) aufweitbar sind, der mit einer Feder (22) gegen einen bei einem Temperaturanstieg erweichenden Schmelzkörper (21) vorgespannt ist.

8. Gasanschlußarmatur nach den Ansprüchen 1 und 7, dadurch gekennzeichnet, daß die Feder (22) einerseits am Bolzen (17) und andererseits unter dem Schmelzkörper (21) abgestützt ist.

9. Gasanschlußarmatur nach den Ansprüchen 1 und 7 bis 8, dadurch gekennzeichnet, daß der Bolzen (17) den Schmelzkörper (21) mit einem Schraubkopf (24) übergreift.

10. Gasanschlußarmatur nach den Ansprüchen 1 und 7 bis 9, dadurch gekennzeichnet, daß der Bolzen (17) die Feder (22) und der Schmelzkörper (21) in einer Schutzkappe angeordnet sind, die mit einer Klemmschraube (26) am Gehäuse (1) befestigt ist.

## Claims

1. A gas connector for gas hoses (6), the connector having a plug (5) adapted to secure a gas line in the event of a fire, the connector having a casing (1) in which a valve lid (8) biased by a spring (10) is disposed, characterised in that
the lid (8) is formed with a groove (12) in its generated surface ;
a heat-expandible hair-pin expanding spring (11) engages tangentially by way of its arms (11a) in the groove (12), and
the expanding spring (11) bears by way of its bridge (11) and of the ends of its arms (11a) on a shoulder (13) in the casing (1).

2. A gas connector according to claim 1, characterised in that the expanding spring is made of a bimetallic alloy which responds to a temperature rise.

3. A gas connector according to claim 1, characterised in that the arms (11a) of the expanding spring (11) can be spread apart by an axially mobile pin (17) of an expansion cartridge (16) which responds to a temperature rise.

4. A gas connector according to claims 1 and 3, characterised in that the cartridge (16) is secured by a clamping screw (18) to the casing (1) with the interposition of sealing means.

5. A gas connector according to claims 1, 3 and 4, characterised in that heat-conductive stars (19) are disposed on the generated surface of the cartridge (16).

6. A gas connector according to claims 1 and 3 to 5, characterised in that a protective cap (20) secured to the casing (1) extends around the cartridge (16).

7. A gas connector according to claim 1, characterised in that the arms (11a) of the expanding spring (11) can be spread apart by means of an axially mobile pin (17) which a spring (22) biases towards a fusible member (21) which softens in response to a temperature rise.

8. A gas connector according to claims 1 and 7, characterised in that the spring (22) bears at one end on the pin (17) and at the other end below the fusible member (21).

9. A gas connector according to claims 1 and 7 to 8, characterised in that the pin (17) engages over the fusible member (21) by way of a screw head (24).

10. A gas connector according to claims 1 and 7 to 9, characterised in that the pin (17), spring (22) and fusible member (21) are disposed in a protective cap which is secured to the casing (1) by a clamping screw (26).

**Revendications**

1. Raccord de branchement de gaz pour tuyaux de gaz (6) comportant un embout emboîtable (5), le raccord étant destiné à la protection d'une conduite de gaz en cas d'incendie et comportant un carter (1) dans lequel est disposé un corps formant soupape (8) précontraint à l'encontre d'un ressort (10),
caractérisé en ce que le corps formant soupape (8) est muni d'une rainure (12) réalisée sur sa périphérie extérieure,
en ce que dans la rainure (12) vient s'engager, tangentiellement avec ses branches (11a), un ressort expansible (11) plié en forme de "U" et pouvant s'élargir sous l'effet de la chaleur, et
en ce que le ressort expansible (11) s'appuie sur un épaulement (13) dans le carter (1), par l'intermédiaire de sa base (11b) et des extrémités des ses branches (11a).

2. Raccord de branchement de gaz selon la revendication 1, caractérisé en ce que le ressort expansible (11) est constitué d'un bilame réagissant à un accroissement de température.

3. Raccord de branchement de gaz selon la revendication 1, caractérisé en ce que les branches (11a) du ressort expansible (11) peuvent être écartées au moyen d'une broche (17) mobile axialement et faisant partie d'une cartouche à matériau de dilatation (16) réagissant à un accroissement de température.

4. Raccord de branchement de gaz selon les revendications 1 et 3, caractérisé en ce que la cartouche à matériau de dilatation (16) est fixée sur le carter (1) au moyen d'une vis de serrage (18), avec interposition de joints d'étanchéité.

5. Raccord de branchement de gaz selon les revendications 1, 3 et 4, caractérisé en ce que sur l'enveloppe de la cartouche à matériau de dilatation (16), sont disposées des étoiles de conduction de la chaleur (19).

6. Raccord de branchement de gaz selon les revendications 1 et 3 à 5, caractérisé en ce que la cartouche à matériau de dilatation (16) est entourée par un cabochon de protection (20) fixé sur le carter (1).

7. Raccord de branchement de gaz selon la revendication 1, caractérisé en ce que les branches (11a) du ressort expansible (11) peuvent être écartées par une broche (17) mobile axialement, qui est appliquée sous précontrainte par un ressort (22), contre un corps fusible (21) ramollissant lors d'un accroissement de température.

8. Raccord de branchement de gaz selon les revendications 1 et 7, caractérisé en ce que le ressort (22) s'appuie, d'une part contre la broche (17), et d'autre part sous le corps fusible (21).

9. Raccord de branchement de gaz selon les revendications 1 et 7 à 8, caractérisé en ce que la broche (17) s'engage par dessus le corps fusible (21) au moyen d'une tête de vis (24).

10. Raccord de branchement de gaz selon les revendications 1 et 7 à 9, caractérisé en ce que la broche (17), le ressort (22) et le corps fusible (21) sont disposés dans un cabochon de protection qui est fixé sur le carter (1) au moyen d'une vis de serrage (26).

**Fig.1**

**Fig.3**

**Fig. 2**

6

# Fig. 4

# Fig.6

# Fig.7

# Fig.5